# EUROPEAN PATENT SPECIFICATION

(11) **EP 1 110 847 B1**
(45) Date of publication and mention of the grant of the patent: **06.10.2004**
(21) Application number: 00311385.9
(22) Date of filing: 19.12.2000
(51) Int. Cl.: B62D 17/00

(54) **Off-set adjusting nut**
Exzentrisch einstellbare Mutter
Ecrou pour ajuster du décalage

(30) Priority: 21.12.1999 US 172815 P
(43) Date of publication of application: 27.06.2001
(73) Proprietor: ILLINOIS TOOL WORKS INC., Glenview, Cook County, Illinois 60025 (US)
(72) Inventor: Ward, Michael E., Geneva, Illinois 60134 (US)
(74) Representative: Rackham, Stephen Neil

(56) References cited:
- GB-A- 358 127
- US-A- 4 031 936
- US-A- 5 382 043

## Description

The present application relates to an adjusting assembly for bolted members. More particularly, the present invention relates to an off-set nut for use in an adjustable assembly for bolted members.

Mechanical assemblies such as those used in automobile steering systems often require alignment and adjustment. These assembled (e.g., bolted) components generally use slotted openings, cam surfaces and specially manufactured components to provide such adjusting capabilities. In one use of such an adjusting assembly, automobile wheel alignment is carried out to maximize steering performance and to provide proper road handling and tire wear.

Desired wheel alignment varies according to particular automobile manufacturers and models and may be further dependent upon external conditions such as rubber and oil accumulation around the joined parts and weather conditions. Typically, automobile alignment involves two parameters, namely, caster and camber. Caster is commonly recognized as the angle between the steering kingpin axis and the vertical. This can be seen when taking a side view of the automobile; that is, looking directly at the side of the automobile wheel. Camber is defined as the amount that the automobile tires tilt at the top relative to the bottom. This is recognized as inwardly or outwardly tilted when viewed from the front of the automobile. As a result of wear, as well as road conditions, rubber and oil accumulation and the like, caster and camber measurements change during the life of the automobile. This results in needed, periodic wheel alignment. These alignments are made within specified manufacturer tolerances.

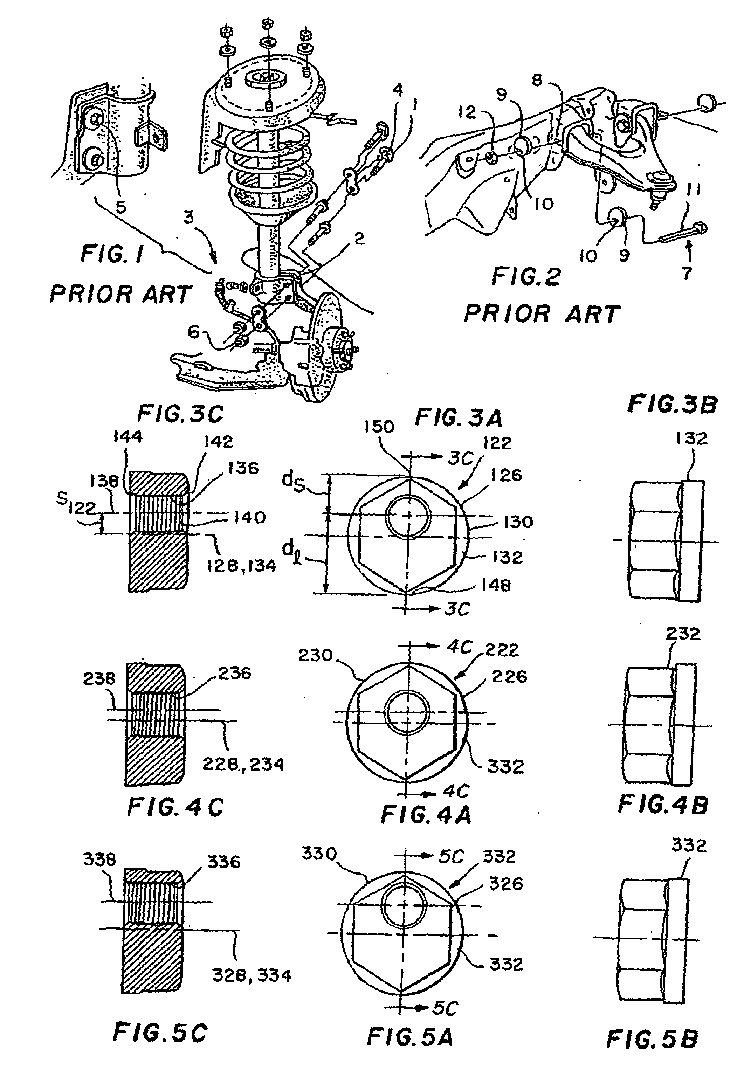

Currently used arrangements for providing the adjustment necessary for wheel alignment use custom bolts, such as cam bolts or knuckle bolts to provide the necessary adjustment. In one arrangement, as shown in Figure 1, a knuckle bolt or cam bolt 1 is fitted into a slotted opening 2 in the steering assembly 3. The bolt 1 includes an off-set flange 4 that serves as a camming surface. As the bolt 1 is rotated, the off-set flange 4 cooperates with a stationary surface S to move the bolt 1 transversely through the slotted opening 2. A nut 6 is then threadedly engaged on the bolt 1 shaft to secure the bolt 1 in the transverse position as set using the off-set flange 4 camming surface.

Figure 2 illustrates a second arrangement in which a cam bolt 7 is inserted through an elongated slot 8 and an off-set or camming washer 9 is positioned on the bolt 7 shaft. The camming washer 9 includes an off-set slot 10 through which the bolt 7 is inserted. The cam bolt 7 has a flat surface 11 extending along the length thereof that cooperates with the slot 10 in the washer 9. As the bolt 7 is rotated, it consequently rotates the washer 9 which functions as a cam to move the bolt 7 transverse to the direction of fastening. A nut 12 is then threaded onto the shaft of the cam bolt 7 and tightened to maintain the assembly in place.

These known adjusting arrangements both require specially manufactured bolts for providing this adjusting feature. In addition, because the overall steering assembly arrangements vary greatly from one vehicle to the next, a wide variety of these specially manufactured bolts are necessary in order to provide the specified parts for each vehicle. Moreover, in the arrangement illustrated in FIG. 2, multiple parts, i.e, specially manufactured bolts and washers, as well as nuts are necessary in order to provide this adjustment feature, again for individual or differing steering assembly arrangements. Furthermore, in this arrangement, it has been found that because the bolt typically has a small driving hex, the torque adjustment on the assembly is limited.

Accordingly there exists a need for adjusting assembly components that minimize the differing number of parts necessary for different vehicles. Desirably, such adjusting assembly components utilize a maximum number of standard or conventional parts and require a minimum number of specially manufactured and/or designed parts. Most desirably, these differing parts are usable with a variety of steering assemblies thus, requiring a minimum inventory of differing parts.

An off-set adjusting nut is configured for use with a bolt for adjusting at least one characteristic of mechanically connected members. A common bolt is used which has a head and a shank extending therefrom. At least a portion of the shank is threaded for engagement with the adjusting nut. The adjusting nut provides for mechanical fastening of components to one another in which transverse (i.e., side-to-side) positioning of the fastening assembly is required.

The nut includes a body portion that defines a nut axis therethrough. The body further defines an upper surface and a lower portion. A round flange is formed integral with the body at the lower portion. The flange is formed on the body such that the nut axis is collinear with an axis of the flange.

A bore is formed in the nut body extending from the upper surface to the lower portion and through the flange. The bore has a thread formed therein for engaging the thread of the bolt shank. The bore is formed off-set in the nut body and defines a bore axis that is parallel to and spaced from the nut axis. The nut axis can lie within the nut bore. Alternately, to provide a greater range of adjustment, the nut axis can lie on a wall defining the bore. Still alternately, to provide an even greater range of adjustment, the nut axis can lie outside of the bore.

When the adjusting nut and bolt are engaged with one another, rotation of the adjusting nut moves the adjusting nut and bolt in a direction transverse to a direction of engagement, i.e., side-to-side, by a camming action. Rotation of the bolt head moves the adjusting nut and bolt in the direction of engagement, i.e., tightening and loosening. A lock nut having an eccentric bore and a clamping recess upon which a spring washer is mounted in a preassembled fashion according to the preamble of claim 1 is disclosed in US 4031936.

In a preferred embodiment, the nut body defines a hexagonal shape. In this configuration, the nut body defines a largest dimension across opposing apices of the hexagonal shape. The flange can have a diameter equal to the largest dimension across the opposing apices. Alternately, the flange can have a diameter greater than the largest dimension across the opposing apices.

The walls that define the bore are circular and can be beveled at a juncture with the upper surface. The bore defining wall at a juncture with the lower portion at the flange can also be beveled.

A particular embodiment will now be described with reference to the accompanying drawings; in which:-
FIG. 1 is a schematic view of one known wheel adjustment aligning assembly, this assembly being common among automobiles manufactured by Chrysler Corporation;
FIG. 2 is a schematic view of a second known wheel alignment adjusting assembly which assembly is commonly found on General Motors automobiles;
FIGS. 3A - 3C illustrate a top view (FIG. 3A), a side view (FIG. 3B) and a cross-sectional view taken along line 3C - 3C (FIG. 3C) of one embodiment of an off-set adjusting nut embodying the principles of the present invention;
FIGS. 4A - 4C are top, side, and cross-sectional views, similar to FIGS. 3A - 3C, of an alternate embodiment of an off-set adjusting nut;
FIGS. 5A - 5C are top, side, and cross-sectional views, similar to FIGS. 3A - 3C, of still another alternate embodiment of an off-set adjusting nut; and,
FIGS 6A and 6B illustrate the range of adjusting capability of the embodiment of the off-set adjusting nut of FIGS. 3A - 3C.

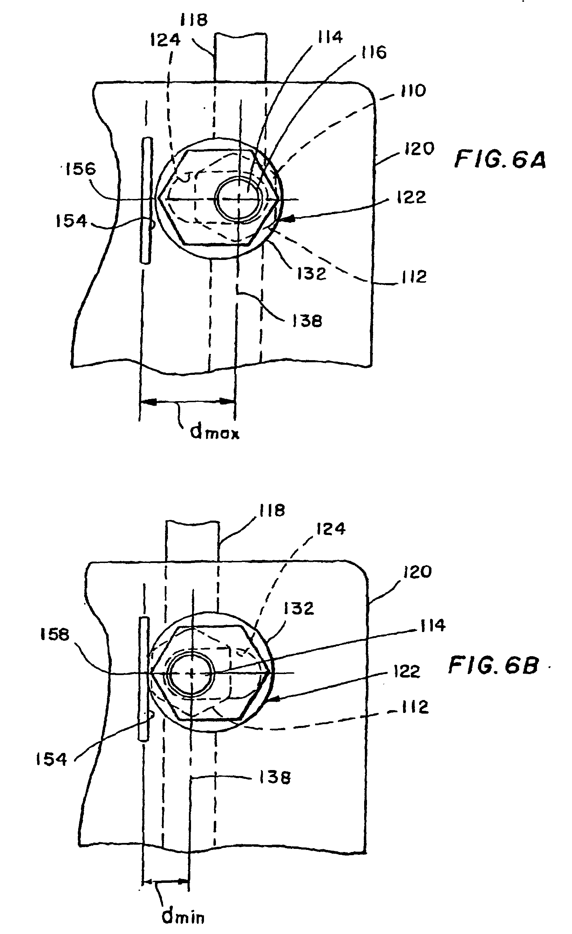

An adjusting assembly in accordance with the principles of the present invention provides for mechanical fastening of components to one another in which controlled, precise transverse positioning (i.e., side-to-side positioning) of the fastening assembly is required. As seen in FIGS. 6A - B, in use in a typical arrangement, for fastening two components to one another, such as a steering knuckle to a strut assembly or portions of a steering assembly to one another, an adjusting nut in accordance with the principles of the present invention provides for adjusting these components relative to one another to, for example, facilitate wheel alignment.

A conventional bolt 110 having a head 112 and a shaft or shank 114 includes a threaded portion 116 at an end of the shank 114 opposite the head 112. The bolt 110 is inserted through first and second members 118, 120 that are fastened to one another. An adjusting nut 122 in accordance with the principles of the present invention is threaded onto the threaded end 116 of the bolt shank 114 and tightened thereon. The components 118, 120 that are fastened to one another are adjustable, transverse to the direction of engagement (i.e., side-to-side adjustment) by an elongated notched or slotted opening 124 formed in one of the members, such as member 120, to permit transverse adjustment as the members 118, 120 are fastened together.

The off-set adjusting nut 122 includes a body 126 defining an axis, as indicated at 128, therethrough. A camming surface 130 is formed as part of the body 126 generally symmetrical relative to the nut axis 128. In a current embodiment, the nut body 126 has a hexagonal shape, which shape (i.e., a hex nut) is commonly used in mechanical fastening assemblies. The camming surface 130 can be configured as a flange 132 that is formed integral with the body 126 and is also symmetrical relative to the nut axis 128. That is, the flange 132 is round and its axis 134 is collinear with the nut axis 128. As such, it is to be understood that any reference to the nut axis 128 by necessity includes or encompasses the flange axis 134.

In a present embodiment, in which the body 126 defines a hexagonal shape, a largest dimension across opposing apices of the hexagonal shape is defined. The flange 132 can have a diameter equal to this largest dimension. Alternately although not shown, the flange 132 can have a diameter greater than this largest dimension across the opposing apices.

An eccentric bore 136 is formed through the body 126, which bore 138 defines a bore axis, as indicated at 138. The bore 136 is formed off-center in the body 126 such that the bore axis 138 and the nut axis 128 are non-collinear, or are spaced from one another as indicated at S₁₂₂. In a typical configuration, the 136 bore is threaded, as indicated at 140, for threadedly engaging the mating threads 116 on the bolt 110. In this manner, the nut 122 engages the bolt 110 in an eccentric manner such that the bolt 110 and nut 124 thread together asymmetrically.

The bore 136 can be configured having beveled or angled walls 142, 144 at the upper end and lower portion, respectively, to permit readily engaging the nut 122 with the bolt 110. The beveled ends 142, 144 also facilitate forming or machining the threads 140 in the nut 122 and further permit cleaning the threads 140 after formation.

The bore 136 can be formed in the nut 122 at various positions. As seen in FIGS. 3A - 3C, the bore 136 can be formed such that the wall 146 that defines the bore 136 (e.g., at the threads 140) lies substantially along the nut axis 128. Alternately, as illustrated in FIGS. 4A - 4C, the nut 224 can be configured such that the nut axis 228 lies within the bore 236, off-set from the bore axis 238. Alternately still, as seen in FIGS. 5A - 5C, the nut 322 can be formed such that the wall 346 that defines the bore 336 (e.g., at the threads 340) is spaced from the nut axis 328.

As will be appreciate by those skilled in the art, and as will be described in detail below, the greater the distance d₁₂₂ between the bore axis 138 and the nut axis 128 The greater the adjusting capabilities of the nut 122. This is, of course, because a greater distance between the nut axis 128 the bore axis 138, results in a greater difference between the largest and smallest distances dₗ, dₛ (as seen in FIG. 3A) between the bore axis 138 and the edges of the flange as indicated at 148 and 150, respectively.

Referring now to FIGS. 6A and 6B, there is shown a schematic illustration of how the present off-set nut 122 provides this adjustment capability. The nut 122 and associated bolt 110 are shown positioned within a portion of steering linkage member 118, 120. These portions can, for example, be a portion of the steering knuckle 118 and a portion of a bracket 120 extending from the front wheel strut. The steering assembly portions correspond to those portions shown in FIG. 1. In that the steering knuckle 118 and strut bracket 120 are to be mounted to one another using the present adjusting nut 122, the steering knuckle includes a round opening (not shown) formed therein through which the bolt 110 is inserted. The strut bracket 120 includes an elongated slot 124 also through which the bolt 110 is inserted. A stationary surface 154 is formed on the bracket 120 against which the nut flange 132 rests to provide the adjusting capability by a camming action.

For purposes of the following description, it is to be understood that the because the opening in the knuckle 118 is fixed (i.e., round); the position of the bolt 110 corresponds to the position of the knuckle 118. That is. the bolt 110 and knuckle 118 move together. Referring to FIG. 6A, the assembly is shown with the nut 122 positioned to rest in a first position in which the steering knuckle 118 is farthest from the stationary surface 154 on the strut bracket 120. This is accomplished by threading the nut 122 onto to the bolt 110, and rotating the nut 122 so that a first flange portion 156, farthest from the bore axis 138 is positioned abutting the stationary surface 154. In this position, the bolt 110 (and thus the knuckle 118) are at a farthest position relative to the bracket 120. This provides a maximum adjusting distance dₘₐₓ capability. It is merely necessary to then tighten the bolt 110 (rather than tightening the nut 122) while maintaining the nut 122 stationary to fix this knuckle/bracket 118/120 position.

Conversely, as shown in FIG. 6B, rotating the nut 122 one hundred eighty degrees (180°) relative to the position of FIG. 6A, positions a second flange portion 158 on the stationary surface 154. In this position, the bolt 110 (and thus the knuckle 118) are at a closest position relative to the bracket 120. This provides a minimum adjusting distance dₘᵢₙ capability. Again, it is merely necessary to then tighten the bolt 110 (rather than the nut 122) while maintaining the 122 nut stationary to fix this knuckle/bracket 118/120 position. It will be readily understood that because of the curved or round periphery of the flange 132, the adjustments capable within the range of adjustments (i.e., dₘₐₓ - dₘᵢₙ) are continuous, rather than at discrete steps.

As will be recognized and appreciated by those skilled in the art, the present adjusting nut 122 permits wheel alignment adjustments without the need for specialized bolts, washers and the like. Rather, with a common bolt 110 (within manufacturer's specifications and tolerances), the present adjusting nut 122 provides for continuously adjusting the distance between, for example, a steering knuckle 118 and its associated strut bracket 120.

As set forth above, the position of the bore axis 138 relative to the nut axis 128 determines the overall adjusting capability for the nut 122. FIGS. 4A,C and 5A,C illustrate the relationship between the location of the bore axis and the nut axis, and the resulting range of adjustment capabilities. As can be seen from FIGS. 4A when the nut axis 228 lies within the bore 236 (i.e., when the nut and bore axes 228, 238 are close to one another), the resulting adjusting capability is relatively small. Conversely, as seen in FIG. 5A when the bore axis 338 is at a greater distance from the nut axis 328, the adjustment capability of the off-set nut 322 is increased.

## Claims

1. An adjustable connecting arrangement adjustably connecting together associated mechanical members (118, 120), one of which (120) includes a stationary abutment surface (154), comprising an off-set nut (122) and an associated bolt (110) having a head (112) and a shank (114) extending therefrom, with at least a portion of the shank (114) being threaded for engagement with the adjusting nut (122), the adjusting nut and bolt, in use, adjusting at least one characteristic of the associated mechanical members (118, 120), the adjusting nut comprising:
a body (126) defining a nut axis (128) therethrough, the body further defining an upper surface and a lower portion;
a round flange (130) formed integral with the body (126) at the lower portion thereof, the flange (130) being formed on the body (126) wherein the nut axis (128) is collinear with an axis of the flange (130); and,
a bore (136) formed in the body (126) extending from the upper surface to the lower portion and through the flange (130), the bore (136) having a thread (140) formed therein;
the bore (136) defining a bore axis (138) that is parallel to and spaced from the nut axis (128),
said adjustable connecting arrangement **characterised in that** said bone (136) is formed off-set in the nut body (126) and
and wherein, in use, when the adjusting nut (122) and bolt (110) are engaged with one another and connect together both mechanical members (118, 120), rotation of the adjusting nut (122) moves the bolt (110) and with it the other member (118) in a direction transverse to the axis of the bolt (110) as a result of camming engagement between the flange (130) and the stationary abutment (154) on the one member (120), and wherein rotation of the bolt (110) causes further engagement between the nut (122) and bolt (110) to clamp the mechanical members (118, 120) together.

2. An adjustable connecting arrangement according to claim 1, wherein the nut axis (128) lies within the nut bore (136).

3. An adjustable connecting arrangement according to claim 1, wherein the nut axis (128) lies on a wall defining the bore (136).

4. An adjustable connecting arrangement according to claim 1, wherein the nut axis (128) lies outside of the bore (136).

5. An adjustable connecting arrangement according to any one of the preceding claims, wherein the nut (126) has a hexagonal shape.

6. An adjustable connecting arrangement according to claim 5, wherein the nut body (126) defines a largest dimension across opposing apices of the hexagonal shape, and wherein the flange (130) has a diameter equal to the largest dimension across the opposing apices.

7. An adjustable connecting arrangement according to any one of the preceding claims, wherein the bore is defined by a circular wall and the bore wall is bevelled (142, 144) at a juncture with the upper and/or lower surface.

8. An adjustable connecting arrangement according to any one of the preceding claims, in which the one mechanical member (120) carrying the stationary abutment surface (154) includes a slot (124) through which the bolt (110) passes.

## Patentansprüche

1. Einstellbare Verbindungsanordnung, welche zugehörige mechanische Bauteile (118,120) einstellbar miteinander verbindet, von denen eines (120) eine stationäre Widerlagerfläche (154) aufweist, aufweisend eine exzentrische Mutter (122) und einen zugehörigen Bolzen (110), der einen Kopf (112) und einen sich von diesem erstreckenden Schaft (114) hat, wobei mindestens ein Abschnitt des Schafts (114) mit einem Gewinde versehen ist für einen Eingriff mit der Stellmutter (122), wobei die Stellmutter und der Bolzen im Einsatz mindestens eine Kenngröße der zugehörigen mechanischen Bauteile (118,120) einstellt, wobei die Stellmutter aufweist:
einen Körper (126), der eine Mutterachse (128) durch diesen hindurch festlegt, wobei der Körper ferner eine obere Oberfläche und einen unteren Abschnitt festlegt;
einen runden Flansch (130), der integral mit dem Körper (126) an dem unteren Abschnitt davon ausgebildet ist, wobei der Flansch (130) an dem Körper (126) geformt ist, wobei die Mutterachse (128) kolinear zu einer Achse des Flansches (130) verläuft; und
eine in dem Körper (126) ausgebildete Bohrung (136), die sich von der oberen Oberfläche zu dem unteren Abschnitt und durch den Flansch (130) erstreckt, wobei die Bohrung (136) ein Gewinde (140) aufweist, das darin ausgebildet ist;
wobei die Bohrung (136) eine Bohrungsachse (138) festlegt, die parallel zu und beabstandet von der Mutterachse (128) verläuft,
wobei die einstellbare Verbindungsanordnung **dadurch gekennzeichnet ist, dass** die Bohrung (136) exzentrisch in dem Mutterkörper (126) ausgebildet ist,
und wobei im Einsatz, wenn die Stellmutter (122) und der Bolzen (110) miteinander in Eingriff stehen und die beiden mechanischen Bauteile (118,120) miteinander verbinden, ein Drehen der Stellmutter (122) den Bolzen (110) und mit ihm das andere Bauteil (118) in einer Richtung quer zu der Achse des Bolzens (110) bewegt, als ein Ergebnis des Nocken-Eingriffs zwischen dem Flansch (130) und dem stationären Widerlager (154) an dem einen Bauteil (120), und wobei ein Drehen des Bolzens (110) einen weitergehenden Eingriff zwischen der Mutter (122) und dem Bolzen (110) verursacht, um die mechanischen Bauteile (118,120) zusammenzuklemmen.

2. Einstellbare Verbindungsanordnung nach Anspruch 1, wobei die Mutterachse (128) innerhalb der Mutterbohrung (136) liegt.

3. Einstellbare Verbindungsanordnung nach Anspruch 1, wobei die Mutterachse (128) auf einer Wand liegt, welche die Bohrung (136) definiert.

4. Einstellbare Verbindungsanordnung nach Anspruch 1, wobei die Mutterachse (128) außerhalb der Bohrung (136) liegt.

5. Einstellbare Verbindungsanordnung nach irgendeinem der vorangehenden Ansprüche, wobei die Mutter (126) eine hexagonale Form hat.

6. Einstellbare Verbindungsanordnung nach Anspruch 5, wobei der Mutterkörper (126) eine größte Abmessung über gegenüberliegende Spitzen der hexagonalen Form definiert, und wobei der Flansch (130) einen Durchmesser hat, der gleich der größten Abmessung über die gegenüberliegenden Spitzen ist.

7. Einstellbare Verbindungsanordnung nach irgendeinem der vorangehenden Ansprüche, wobei die Bohrung durch eine kreisförmige Wand festgelegt ist und die Bohrungswand an einer Verbindungsstelle mit der oberen und/oder unteren Oberfläche abgeschrägt (142,144) ist.

8. Einstellbare Verbindungsanordnung nach irgendeinem der vorangehenden Ansprüche, bei der das eine mechanische Bauteil (120), das die stationäre Widerlagerfläche (154) trägt, einen Schlitz (124) aufweist, durch den der Bolzen (110) hindurchgeht.

## Revendications

1. Dispositif de connexion réglable connectant ensemble de manière réglable des éléments mécaniques associés (118 120), dont l'un comprend une surface de butée stationnaire (154), comprenant un écrou excentré (122) et un boulon (110) associé ayant une tête (112) et une tige (114) s'étendant à partir de celle-ci, au moins une partie de la tige (114) étant filetée pour se mettre en prise avec l'écrou de réglage (122), l'écrou de réglage et le boulon s'ajustant à l'usage à au moins une caractéristique des éléments mécaniques associés (118, 120), l'écrou de réglage comprenant :
un corps (126) définissant un axe d'écrou (128) à travers lui, ce corps définissant en outre une surface supérieure et une surface inférieure;
une collerette ronde (130) intégrée avec le corps (126) dans la partie inférieure de celui-ci, cette collerette (130) étant formée sur le corps (126) et l'axe d'écrou (128) étant colinéaire avec un axe de 1 collerette (130); et
un alésage (136) formé dans le corps (126) s'étendant de la surface supérieure à la surface inférieure et à travers la collerette (130), l'alésage (136) ayant un filet (140) formé à l'intérieur;
l'alésage (136) définissant un axe d'alésage (138) qui est parallèle et espacé par rapport à l'axe d'écrou (128),
ledit dispositif de connexion réglable étant **caractérisé en ce que** ledit alésage (136) est excentré dans le corps d'écrou (126) et que, à l'usage, lorsque l'écrou de réglage (122) et le boulon (110) sont en prise l'un avec l'autre et connectent ensemble les deux éléments mécaniques (118, 120), la rotation de l'écrou de réglage (122) déplace le boulon (110) et avec lui l'autre élément (118) dans une direction transversale par rapport à l'axe du boulon (110) du fait de la prise excentrée entre la collerette (130) et la butée stationnaire (154) sur l'autre élément (120), et que la rotation du boulon (110) provoque une prise supplémentaire entre l'écrou (122) et le boulon (110) pour bloquer ensemble les éléments mécaniques (118, 120).

2. Dispositif de connexion réglable selon la revendication 1, dans lequel l'axe d'écrou (128) est situé à l'intérieur de l'alésage d'écrou (136).

3. Dispositif de connexion réglable selon la revendication 1, dans lequel l'axe d'écrou (128) est situé sur une paroi définissant l'alésage (136).

4. Dispositif de connexion réglable selon la revendication 1, dans lequel l'axe d'écrou (128) est situé à l'extérieur de l'alésage d'écrou (136).

5. Dispositif de connexion réglable selon une quelconque des la revendications précédentes, dans lequel l'écrou (126) a une forme hexagonale.

6. Dispositif de connexion réglable selon la revendication 5, dans lequel le corps d'écrou (126) définit une dimension maximale traversant des sommets opposés de la forme hexagonale, et dans lequel la collerette (130) a un diamètre égal à la dimension maximale traversant les sommets opposés.

7. Dispositif de connexion réglable selon une quelconque des revendications précédentes, dans lequel l'alésage est défini par une paroi circulaire et la paroi d'alésage est biseautée (142, 144) au niveau d'une jonction avec la surface supérieure et/ou inférieure.

8. Dispositif de connexion réglable selon une quelconque des revendications précédentes, dans lequel l'élément mécanique (120) portant la surface de butée stationnaire (154) comprend une fente (124) à travers laquelle passe le boulon (110).
